# EUROPEAN PATENT APPLICATION

(11) **EP 4 124 878 A2**
(43) Date of publication of application: **01.02.2023**
(21) Application number: 22196894.4
(22) Date of filing: 21.09.2022
(51) Int. Cl.: G01S 7/00

(54) **METHOD AND APPARATUS FOR CALIBRATING LIDAR AND POSITIONING DEVICE AND STORAGE MEDIUM**

(30) Priority: 22.09.2021 CN 202111109237
(71) Applicant: Apollo Intelligent Driving Technology (Beijing) Co., Ltd., Haidian District Beijing 100085 (CN)
(72) Inventor: XIE, Qingqing, Beijing, 100085 (CN); ZHANG, Yanfu, Beijing, 100085 (CN); ZHANG, Jiali, Beijing, 100085 (CN)
(74) Representative: advotec.

(57) **Abstract**

A method and an apparatus for calibrating a Lidar and a positioning device and a storage medium The method includes: acquiring (101) a point-cloud data sequence of the Lidar and a pose data sequence of the positioning device, in which, the Lidar and the positioning device are on a same traveling device; determining (102) first trajectory information of the Lidar and second trajectory information of the positioning device according to the point-cloud data sequence and the pose data sequence; and determining (103) a calibration offset between the Lidar and the positioning device according to the first trajectory information and the second trajectory information, in which, a matching degree between the first trajectory information and the second trajectory information satisfies a preset matching degree condition under a trajectory information correspondence determined based on the calibration offset.

## Description

### TECHNICAL FIELD

The invention relates to the field of artificial intelligence technologies, specially to the field of automatic driving, intelligent transportation, and Internet of things, and in particular to a method and an apparatus for calibrating a Lidar and a positioning device and a storage medium.

### BACKGROUND

In a process of driving an unmanned vehicle, perception and positioning of the vehicle body are completed by collaboration between various sensors, the precondition of which is to know a coordinate transformation relationship between the sensors.

### SUMMARY

The present invention provides a method and an apparatus for calibrating a Lidar and a positioning device and a storage medium.

According to a first aspect of the present invention, there is provided a method for calibrating a Lidar and a positioning device. The method may include: acquiring a point-cloud data sequence of the Lidar and a pose data sequence of the positioning device, in which, the Lidar and the positioning device are on a same traveling device; determining first trajectory information of the Lidar and second trajectory information of the positioning device according to the point-cloud data sequence and the pose data sequence; and determining a calibration offset between the Lidar and the positioning device according to the first trajectory information and the second trajectory information, in which, a matching degree between the first trajectory information and the second trajectory information satisfies a preset matching degree condition under a trajectory information correspondence determined based on the calibration offset.

According to a second aspect of the present invention, there is provided an apparatus for calibrating a Lidar and a positioning device. The apparatus may include: an acquisition module, configured to acquire a point-cloud data sequence of the Lidar and a pose data sequence of the positioning device, in which, the Lidar and the positioning device are on a same traveling device; a first determination module, configured to determine first trajectory information of the Lidar and second trajectory information of the positioning device according to the point-cloud data sequence and the pose data sequence; and a second determination module, configured to determine a calibration offset between the Lidar and the positioning device according to the first trajectory information and the second trajectory information, in which, a matching degree between the first trajectory information and the second trajectory information satisfies a preset matching degree condition under a trajectory information correspondence determined based on the calibration offset.

According to a third aspect of the present invention, there is provided a computer-readable storage medium storing computer instructions. The computer instructions are configured to cause a computer to perform the method according to any one of embodiments of the first aspect or the method according to the first aspect as described above.

It should be understood that the content described in this section is not intended to identify the key or important features of the embodiments of the invention, nor is it intended to limit the scope of the invention. Additional features of the invention will be easily understood through the following description.

### BRIEF DESCRIPTION OF THE DRAWINGS

The drawings are used to better understand the solution and do not constitute a limitation of the invention, in which:
FIG. 1 is a flowchart illustrating a method for calibrating a Lidar and a positioning device according to a first embodiment of the present invention.
FIG. 2 is a flowchart illustrating a method for calibrating a Lidar and a positioning device according to a second embodiment of the present invention.
FIG. 3 is a flowchart illustrating a method for calibrating a Lidar and a positioning device according to a third embodiment of the present invention.
FIG. 4 is a flowchart illustrating a method for calibrating a Lidar and a positioning device according to a fourth embodiment of the present invention.
FIG. 5 is a flowchart illustrating a method for calibrating a Lidar and a positioning device according to a fifth embodiment of the present invention.
FIG. 6 is a schematic diagram illustrating a calibration offset between a Lidar and a positioning device according to an embodiment of the present invention.
FIG. 7 is a block diagram illustrating an apparatus for calibrating a Lidar and a positioning device according to a sixth embodiment of the present invention.
FIG. 8 is a block diagram illustrating an electronic device for implementing embodiments of the present invention.

### DETAILED DESCRIPTION

The exemplary embodiments of the invention are described below in combination with the accompanying drawings, which include various details of the embodiments of the invention to aid in understanding, and should be considered merely exemplary. Therefore, those skilled in the art should know that various changes and modifications may be made to the embodiments described herein without departing from the scope of the invention. For the sake of clarity and brevity, descriptions of well-known features and structures have been omitted from the following description.

In a process of driving an unmanned vehicle, perception and positioning of the vehicle body are completed by collaboration between various sensors, the precondition of which is to know a coordinate transformation relationship between the sensors. In order to acquire the coordinate transformation relationship, it is required to calibrate the sensors and determine a space-time offset between the sensors.

In the related art, linear interpolation is performed on poses provided by a positioning device according to a time point of acquired data of Lidar to determine spatial installation external parameters of the positioning device at the time point. However, the above solution has low accuracy of the linear interpolation, and can only acquire a space offset but difficult to acquire a time offset, and has poor calibration accuracy and efficiency.

For this, the present invention provides a method for calibrating a Lidar and a positioning device, a device, and an autonomous vehicle.

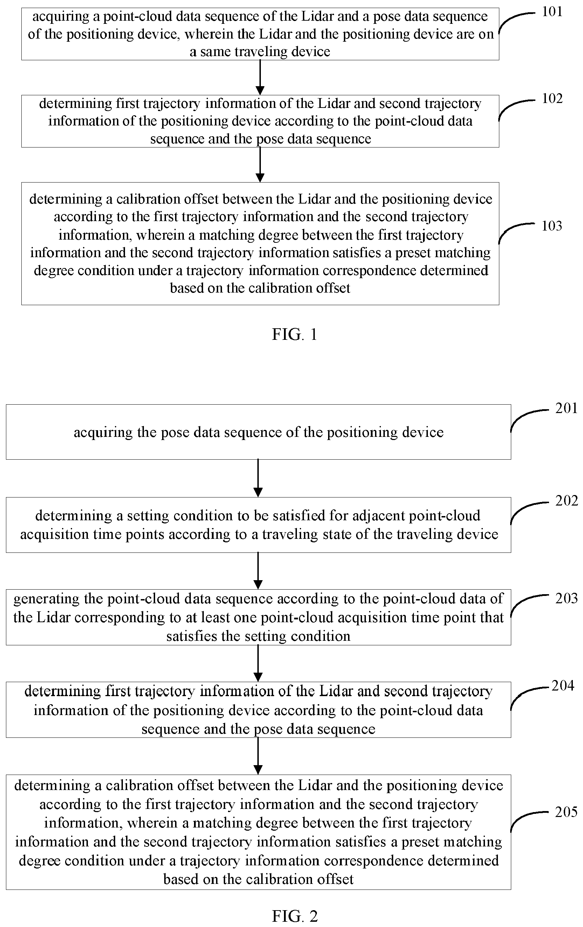

FIG. 1 is a flowchart illustrating a method for calibrating a Lidar and a positioning device according to a first embodiment of the present invention. It can be noted that the method for calibrating the Lidar and the positioning device according to an embodiment of the present invention may be performed by an apparatus for calibrating a Lidar and a positioning device. The apparatus can be configured in an electronic device to enable the electronic device to perform a function of calibrating the calibrating and the positioning device. The electronic device may be a personal computer (PC), a mobile terminal, a server, etc., and the mobile terminal may be, for example, an on-board device, a mobile phone, a tablet computer, a personal digital assistant, a wearable device, or other hardware device with various operation systems, touch screens and/or display screens.

As illustrated in FIG. 1, the method for calibrating a Lidar and a positioning device may include the following blocks.

At block S101, a point-cloud data sequence of the Lidar and a pose data sequence of the positioning device are acquired. The Lidar and the positioning device are on a same traveling device.

In an embodiment of the present invention, the point-cloud data sequence of the Lidar refers to point-cloud data generated based on feedback signals in a case that the Lidar emits laser signals to surrounding objects at a plurality of point-cloud acquisition time points. The point-cloud data may represent a positional relationship and intensity information between each object surrounding the Lidar under a world coordinate system, such as X, Y, Z coordinate information and gray value information. The pose data sequence of the positioning device refers to pose data acquired by the positioning device at different acquisition time points. The pose may include coordinate position and/or posture. The positioning device refers to a sensor capable of realizing positioning, position measurement and posture measurement. For example, the positioning device may be an inertial measurement unit (IMU). The Lidar and the positioning device are located on the same travelling device. For example, the Lidar and the positioning device may be an on-board device and an on-board positioning device located on the same travelling vehicle.

At block 102, first trajectory information of the Lidar and second trajectory information of the positioning device are determined according to the point-cloud data sequence and the pose data sequence.

In an embodiment of the present invention, pose data of the Lidar at the plurality of point-cloud acquisition time points may be determined according to the point-cloud data in the point-cloud data sequence, and the first trajectory information may be determined according to the pose data of the Lidar at the plurality of point-cloud acquisition time points. Curve fitting is performed on the plurality of pose data in the pose data sequence of the positioning device to obtain the second trajectory information of the positioning device. It should be noted that the first trajectory information may include the plurality of point-cloud acquisition time points of the Lidar and the pose data of the Lidar at the plurality of point-cloud acquisition time points, which may be discrete trajectory information.

At block 103, a calibration offset between the Lidar and the positioning device is determined according to the first trajectory information and the second trajectory information. A matching degree between the first trajectory information and the second trajectory information satisfies a preset matching degree condition under a trajectory information correspondence determined based on the calibration offset.

In an embodiment of the present invention, the matching degree between the first trajectory information and the second trajectory information may be determined according to the first trajectory information and the second trajectory information, and the calibration offset between the Lidar and the positioning device may be determined in response to the matching degree satisfying the preset matching degree condition. It should be noted that the calibration offset may be a calibration space offset, such as a coordinate transformation relationship between the pose of the Lidar and the pose of the positioning device. Alternatively, the calibration offset may be the calibration space offset and a calibration time offset. The preset matching degree condition may be a maximum value of at least one matching degree between the first trajectory information and the second trajectory information under at least one trajectory information correspondence.

It should be noted that based on the determined coordinate transformation relationship, calibration space offset and calibration time offset between the pose of the Lidar and the pose of the positioning device, combined with the point-cloud data of the Lidar and data output by the positioning device, data fusion is carried out. Based on the fused data, combined with a preset driving strategy, travelling of an autonomous driving vehicle may be controlled.

To sum up, with acquiring the point-cloud data sequence of the Lidar and the pose data sequence of the positioning device, in which the Lidar and the positioning device are on a same traveling device, determining the first trajectory information of the Lidar and the second trajectory information of the positioning device according to the point-cloud data sequence and the pose data sequence, and determining the calibration offset between the Lidar and the positioning device according to the first trajectory information and the second trajectory information, in which, the matching degree between the first trajectory information and the second trajectory information satisfies the preset matching degree condition under the trajectory information correspondence determined based on the calibration offset, the coordinate transformation relationship and time offset between the positioning device and the Lidar may be determined, thus improving accuracy and efficiency of the calibration.

In order to accurately acquire the point-cloud data sequence of the Lidar and the pose data sequence of the positioning device, as illustrated in FIG. 2, FIG. 2 is a flowchart illustrating a method for calibrating a Lidar and a positioning device according to a second embodiment of the present invention. In an embodiment of the present invention, the pose data of the positioning device at different time points may be acquired, and the point-cloud data sequence may be generated according to the point-cloud data of the Lidar corresponding to the at least one point-cloud acquisition time point that satisfies the setting condition. An embodiment illustrated in FIG. 2 may include the following blocks.

At block 201, the pose data sequence of the positioning device is acquired.

In an embodiment of the present invention, the positioning device may acquire its own pose data at different acquisition time points, and generate the pose data sequence according to the pose data acquired at different acquisition time points.

At block 202, a setting condition to be satisfied for adjacent point-cloud acquisition time points is determined according to a traveling state of the traveling device.

It should be understood that the amount of the point-cloud data acquired by the Lidar at each acquisition time point is large. In a stationary state of the travelling device, frequently acquiring the point-cloud data of a surrounding environment by the Lidar may lead to data redundancy. Therefore, in order to reduce the data redundancy, in an embodiment of the present invention, the setting condition to be satisfied for the adjacent point-cloud acquisition time points may be determined according to the traveling state of the traveling device. The setting condition may include a time difference between the adjacent point-cloud acquisition time points satisfying a difference threshold corresponding to the traveling state; or, a displacement of the Lidar between the adjacent point-cloud acquisition time points satisfying a displacement threshold corresponding to the traveling state.

For example, the traveling device is a vehicle, when the vehicle is stationary, a frequency of the Lidar acquiring the point-cloud data may be increased, or the corresponding time points before and after the vehicle travels a certain distance may be determined as the adjacent point-cloud acquisition time points of the Lidar.

At block 203, the point-cloud data sequence is generated according to the point-cloud data of the Lidar corresponding to at least one point-cloud acquisition time point that satisfies the setting condition.

Further, when the setting condition is satisfied, the point-cloud data sequence is generated based on the point-cloud data acquired by the Lidar at the at least one point-cloud acquisition time point.

At block 204, first trajectory information of the Lidar and second trajectory information of the positioning device are determined according to the point-cloud data sequence and the pose data sequence.

At block 205, a calibration offset between the Lidar and the positioning device is determined according to the first trajectory information and the second trajectory information. A matching degree between the first trajectory information and the second trajectory information satisfies a preset matching degree condition under a trajectory information correspondence determined based on the calibration offset.

In an embodiment of the present invention, the blocks 204 to 205 may be implemented in any one of embodiments of the present invention. An embodiment of the present invention is not limited herein, and will not be described again.

To sum up, with acquiring the pose data sequence of the positioning device, determining the setting condition to be satisfied for the adjacent point-cloud acquisition time points according to the traveling state of the traveling device, and generating the point-cloud data sequence according to the point-cloud data of the Lidar corresponding to the at least one point-cloud acquisition time point that satisfies the setting condition, the point-cloud data sequence of the Lidar and the pose data sequence of the positioning device may be accurately acquired, and the data redundancy may be reduced.

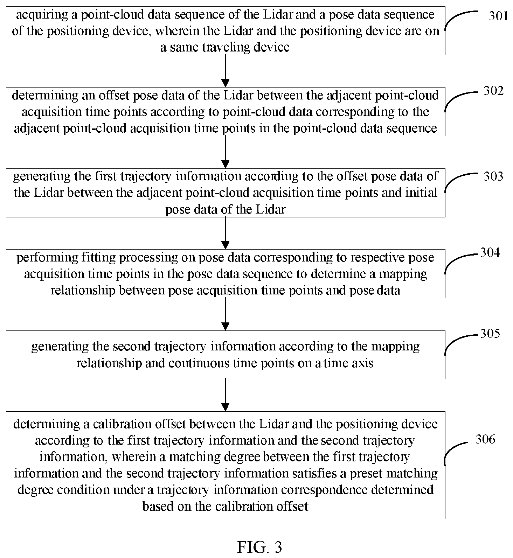

In order to accurately determine the first trajectory information of the Lidar and the second trajectory information of the positioning device, as illustrated in FIG. 3, FIG. 3 is a flowchart illustrating a method for calibrating a Lidar and a positioning device according to a third embodiment of the present invention. In an embodiment of the present invention, the trajectory information of the Lidar may be determined according to initial pose data of the Lidar and offset pose data between the adjacent point-cloud acquisition time points. The second trajectory information is generated according to a mapping relationship between pose acquisition time points and pose data of the positioning device and continuous time points on a time axis. As illustrated in FIG. 3, an embodiment illustrated in FIG. 3 may include the following blocks.

At block S301, a point-cloud data sequence of the Lidar and a pose data sequence of the positioning device are acquired. The Lidar and the positioning device are on a same traveling device.

At block S302, an offset pose data of the Lidar between the adjacent point-cloud acquisition time points is determined according to point-cloud data corresponding to the adjacent point-cloud acquisition time points in the point-cloud data sequence.

It should be understood that for each point-cloud data in the point-cloud data sequence, since the pose of the same object in the point-cloud data is unchanged, the pose data of the Lidar in each frame of data may be determined according to a relationship between the pose of the object in the point-cloud data and the pose of the Lidar. Then, the offset pose data of the Lidar between the adjacent point-cloud acquisition time points is determined according to the point-cloud data at the adjacent point-cloud acquisition time points in the point-cloud data sequence.

In order to more accurately acquire the offset pose data of the Lidar between the adjacent point-cloud acquisition time points, for example, according to the adjacent point-cloud acquisition time points in the point-cloud data sequence, offset pose data of the positioning device between the adjacent point-cloud acquisition time points determined by querying the second trajectory information. Initial offset pose data of the Lidar between the adjacent point-cloud acquisition time points is determined according to the offset pose data of the positioning device between the adjacent point-cloud acquisition time points and an initial offset between the positioning device and the Lidar. The offset pose data of the Lidar between the adjacent point-cloud acquisition time points is determined according to the initial offset pose data of the Lidar between the adjacent point-cloud acquisition time points and the point-cloud data corresponding to the adjacent point-cloud acquisition time points.

That is, the second trajectory information may be generated according to the mapping relationship between the pose acquisition time points and the pose data of the positioning device, and the continuous time points on the time axis. Further, the pose data of the positioning device at the adjacent point-cloud acquisition time points may be correspondingly queried in the second trajectory information according to the adjacent point-cloud acquisition time points in the point-cloud data sequence, and the pose data of the positioning device at the adjacent point-cloud acquisition time points may be compared to determine the offset pose data of the positioning device between the adjacent point-cloud acquisition time points. Further, the initial offset pose data of the Lidar between the adjacent point-cloud acquisition time points may be determined according to the offset pose data of the positioning device between the adjacent point-cloud acquisition time points and the initial offset between the positioning device and the Lidar (an offset of the initial installation position and posture between the positioning device and the Lidar). Finally, the initial offset pose data of the Lidar between the adjacent point-cloud acquisition time points is taken as the initial value, and the initial offset pose data of the Lidar between the adjacent point-cloud acquisition time points is adjusted by using an iterative closed point (ICP) algorithm according to the point-cloud data at the adjacent point-cloud acquisition time points, so that the poses of the same object in the point-cloud data corresponding to the adjacent point-cloud acquisition time points overlap, and then, the corresponding adjusted initial offset pose data is used as the offset pose data of the Lidar between the adjacent point-cloud acquisition time points. Thus, the offset pose data of Lidar between the adjacent point-cloud acquisition time points may be accurately determined.

At block 304, the first trajectory information is generated according to the offset pose data of the Lidar between the adjacent point-cloud acquisition time points and initial pose data of the Lidar.

Further, combining the offset pose data of the Lidar between the adjacent point-cloud acquisition time points with the initial pose data of the Lidar, the pose information of the Lidar at each acquisition time point may be determined. And then, the pose information of the Lidar at each acquisition time point is taken as the first trajectory information of the Lidar.

At block 304, fitting processing is performed on pose data corresponding to respective pose acquisition time points in the pose data sequence to determine a mapping relationship between pose acquisition time points and pose data.

In an embodiment of the invention, 6-order B-spline fitting may be performed on the pose data at each pose acquisition time point in the pose data sequence to generate a spline function, which may characterize the mapping relationship between the pose acquisition time points and the pose data.

At block 305, the second trajectory information is generated according to the mapping relationship and continuous time points on a time axis.

Further, the mapping relationship (the spline function) is expressed in a form of time continuity on the time axis to generate the second trajectory information.

At block 306, a calibration offset between the Lidar and the positioning device is determined according to the first trajectory information and the second trajectory information. A matching degree between the first trajectory information and the second trajectory information satisfies a preset matching degree condition under a trajectory information correspondence determined based on the calibration offset.

In an embodiment of the present invention, the blocks 301 and 306 may be implemented in any one of embodiments of the present invention. Embodiment of the present invention may not be limited herein, and will not be described again.

To sum up, with determining the offset pose data of the Lidar between the adjacent point-cloud acquisition time points according to the point-cloud data corresponding to the adjacent point-cloud acquisition time points in the point-cloud data sequence, generating the first trajectory information according to the offset pose data of the Lidar between the adjacent point-cloud acquisition time points and initial pose data of the Lidar, performing the fitting processing on pose data corresponding to respective pose acquisition time points in the pose data sequence to determine the mapping relationship between pose acquisition time points and pose data, and generating the second trajectory information according to the mapping relationship and continuous time points on the time axis, the first trajectory information of the Lidar and the second trajectory information of the positioning device may be accurately determined.

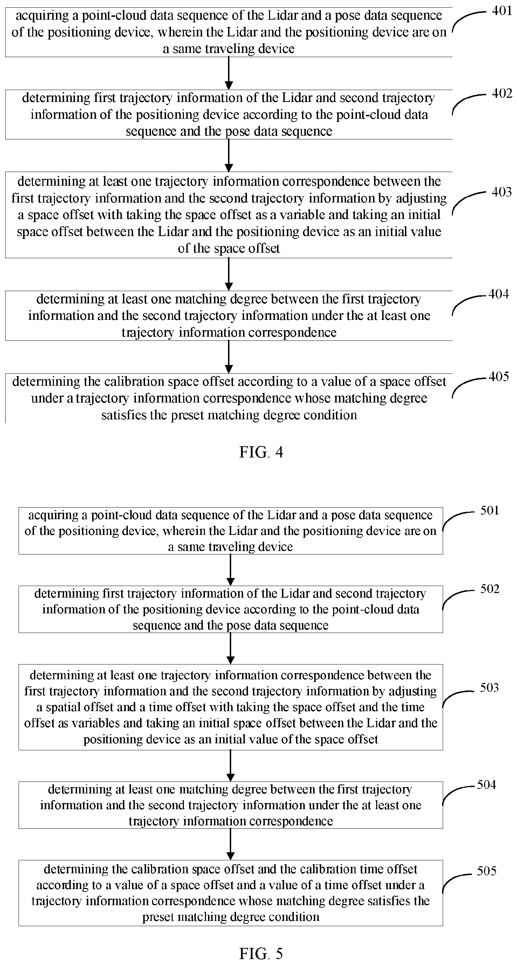

In order to accurately determine the calibration offset between the Lidar and the positioning device, as illustrated in FIG. 4, FIG. 4 is a schematic diagram illustrating a method for calibrating a Lidar and a positioning device according to a fourth embodiment of the present invention. As an example, in a case that the calibration offset is a calibration space offset, a space offset is adjusted with taking the space offset as a variable and taking an initial space offset between the Lidar and the positioning device as an initial value of the space offset, to enable the first trajectory information and the second trajectory information to meet at least one trajectory information correspondence. A value of the space offset under the correspondence may be used as the calibration space offset. An embodiment illustrated in FIG. 4 may include the following blocks.

At block S401, a point-cloud data sequence of the Lidar and a pose data sequence of the positioning device are acquired. The Lidar and the positioning device are on a same traveling device.

At block 402, first trajectory information of the Lidar and second trajectory information of the positioning device are determined according to the point-cloud data sequence and the pose data sequence.

At block 403, at least one trajectory information correspondence between the first trajectory information and the second trajectory information is determined by adjusting a space offset with taking the space offset as a variable and taking an initial space offset between the Lidar and the positioning device as an initial value of the space offset.

In an embodiment of the present invention, the initial space offset between the Lidar and the positioning device may be determined according to initial installation positions of the Lidar and the positioning device, and the initial space offset between the Lidar and the positioning device is taken as an initial value of the space offset, and the space offset is adjusted such that the first trajectory information and the second trajectory information reach the at least one trajectory information correspondence. For example, trajectory alignment between the first trajectory information and the second trajectory information is achieved.

At block 404, at least one matching degree between the first trajectory information and the second trajectory information under the at least one trajectory information correspondence is determined.

In an embodiment of the present invention, in a case that there is at least one trajectory information correspondence between the first trajectory information and the second trajectory information, the matching degree between the first trajectory information and the second trajectory information is determined according to a matching algorithm.

At block 405, the calibration space offset is determined according to a value of a space offset under a trajectory information correspondence whose matching degree satisfies the preset matching degree condition.

In an embodiment, the preset matching degree condition comprises a maximum value of at least one matching degree between the first trajectory information and the second trajectory information under at least one trajectory information correspondence. That is, in order to accurately determine the calibration space offset, when the trajectory alignment between the first trajectory information and the second trajectory information is reached, the space variable determined when the matching degree between the first trajectory information and the second trajectory information reaches the maximum value may be used as the calibration space offset.

In an embodiment of the present invention, the blocks 401-402 may be implemented in any one of embodiments of the present invention. Embodiments of the present invention may not be limited herein, and will not be described again.

To sum up, by determining the at least one trajectory information correspondence between the first trajectory information and the second trajectory information by adjusting the space offset with taking the space offset as the variable and taking the initial space offset between the Lidar and the positioning device as the initial value of the space offset, determining the at least one matching degree between the first trajectory information and the second trajectory information under the at least one trajectory information correspondence, and determining the calibration space offset according to the value of the space offset under the trajectory information correspondence whose matching degree satisfies the preset matching degree condition, the calibration space offset between the Lidar and the positioning device may be accurately determined.

In order to accurately determine the calibration offset between the Lidar and the positioning device, as illustrated in FIG. 5, FIG. 5 is a schematic diagram illustrating a method for calibrating a Lidar and a positioning device according to a fifth embodiment of the present invention. As an example, in a case that the calibration offset is a calibration space offset and a calibration time offset, a space offset and a time offset are adjusted with taking the space offset and the time offset as variables and taking an initial space offset between the Lidar and the positioning device as an initial value of the space offset, to enable the first trajectory information and the second trajectory information to meet at least one trajectory information correspondence. A value of the space offset and a value of the time offset under the correspondence may be used as the calibration space offset and the calibration time offset. An embodiment illustrated in FIG. 5 may include the following blocks.

At block S501, a point-cloud data sequence of the Lidar and a pose data sequence of the positioning device are acquired. The Lidar and the positioning device are on a same traveling device.

At block 502, first trajectory information of the Lidar and second trajectory information of the positioning device are determined according to the point-cloud data sequence and the pose data sequence.

At block 503, at least one trajectory information correspondence between the first trajectory information and the second trajectory information is determined by adjusting a spatial offset and a time offset with taking the space offset and the time offset as variables and taking an initial space offset between the Lidar and the positioning device as an initial value of the space offset.

In an embodiment of the present invention, the initial space offset between the Lidar and the positioning device may be determined according to initial installation positions of the Lidar and the positioning device, and the initial space offset between the Lidar and the positioning device is taken as an initial value of the space offset, and the space offset is adjusted. The initial time offset between the Lidar and the positioning device may be determined according to a first point-cloud acquisition time point of the Lidar and a first pose acquisition time point of the positioning device, and the initial time offset between the Lidar and the positioning device may be taken as the initial value of the time offset, and the time offset may be adjusted such that the first trajectory information and the second trajectory information reach the at least one trajectory information correspondence. For example, the trajectory alignment between the first trajectory information and the second trajectory information is achieved.

At block 504, at least one matching degree between the first trajectory information and the second trajectory information under the at least one trajectory information correspondence is determined.

In an embodiment of the present invention, in a case that there is at least one trajectory information correspondence between the first trajectory information and the second trajectory information, the matching degree between the first trajectory information and the second trajectory information is determined according to a matching algorithm.

At block 505, the calibration space offset and the calibration time offset are determined according to a value of a space offset and a value of a time offset under a trajectory information correspondence whose matching degree satisfies the preset matching degree condition.

In an embodiment, the preset matching degree condition comprises a maximum value of at least one matching degree between the first trajectory information and the second trajectory information under at least one trajectory information correspondence. That is, in order to accurately determine the calibration space offset and the calibration time offset, when the trajectory alignment between the first trajectory information and the second trajectory information is reached, the space variable and the time variable determined when the matching degree between the first trajectory information and the second trajectory information reaches the maximum value may be respectively used as the calibration space offset and the calibration time offset.

In an embodiment of the present invention, the blocks 501-502 may be implemented in any one of embodiments of the present invention. Embodiments of the present invention may not be limited herein, and will not be described again.

To sum up, by determining the at least one trajectory information correspondence between the first trajectory information and the second trajectory information by adjusting the spatial offset and the time offset with taking the space offset and the time offset as variables and taking the initial space offset between the Lidar and the positioning device as the initial value of the space offset, determining the at least one matching degree between the first trajectory information and the second trajectory information under the at least one trajectory information correspondence, and determining the calibration space offset and the calibration time offset according to the value of the space offset and the value of the time offset under the trajectory information correspondence whose matching degree satisfies the preset matching degree condition, the calibration space offset and the calibration time offset between the Lidar and the positioning device may be accurately determined..

As an application scene, in a scene of automatic driving of a vehicle, the vehicle may complete perception and positioning for the vehicle body according to the point-cloud data of the Lidar and the data acquired by the positioning device combined with each other. Thus, the calibration offset between the Lidar and the positioning device may be accurately determined, the perception and the positioning for the vehicle body may be better completed, and a route of the automatic driving of the vehicle may be more accurate.

In order to better illustrate the above embodiment, an example is described below.

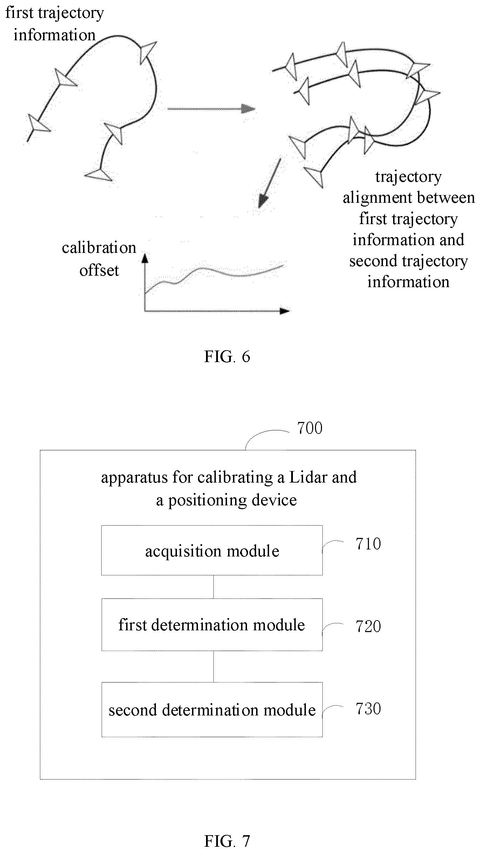

For example, as illustrated in FIG. 6, the first trajectory information of the Lidar and the second trajectory information of the positioning device may be determined according to the point-cloud data sequence and the pose data sequence. In a case that the trajectory alignment between the first trajectory information and the second trajectory information is achieved, the matching degree between the first trajectory information and the second trajectory information may reach the maximum value, and the calibration offset between the Lidar and the positioning device may be determined.

According to the method for calibrating the Lidar and the positioning device provided by an embodiment of the present invention, the point-cloud data sequence of the Lidar and the pose data sequence of the positioning device are acquired, in which the Lidar and the positioning device are on the same traveling device. The first trajectory information of the Lidar and the second trajectory information of the positioning device are determined according to the point-cloud data sequence and the pose data sequence. The calibration offset between the Lidar and the positioning device is determined according to the first trajectory information and the second trajectory information, in which, the matching degree between the first trajectory information and the second trajectory information satisfies the preset matching degree condition under the trajectory information correspondence determined based on the calibration offset. Therefore, the coordinate transformation relationship and the time offset between the positioning device and the Lidar may be determined, thus improving accuracy and efficiency of the calibration. And without setting up a calibration station, external parameter calibration between the Lidar and the positioning device may be completed by relying on the surrounding environment, which saves costs.

In order to implement the above embodiments, the present invention also proposes an apparatus for calibrating a Lidar and a positioning device.

As illustrated in FIG. 7, FIG. 7 is a block diagram illustrating an apparatus for calibrating a Lidar and a positioning device according to a sixth embodiment of the present invention. The apparatus 700 may include an acquisition module 710, a first determination module 720 and a second determination module 730.

The acquisition module 710 is configured to acquire a point-cloud data sequence of the Lidar and a pose data sequence of the positioning device, in which, the Lidar and the positioning device are on a same traveling device. The first determination module 720 is configured to determine first trajectory information of the Lidar and second trajectory information of the positioning device according to the point-cloud data sequence and the pose data sequence. The second determination module 730 is configured to determine a calibration offset between the Lidar and the positioning device according to the first trajectory information and the second trajectory information, in which, a matching degree between the first trajectory information and the second trajectory information satisfies a preset matching degree condition under a trajectory information correspondence determined based on the calibration offset.

As a possible implementation of an embodiment of the present invention, the acquisition module 710 is configured to: acquire the pose data sequence of the positioning device; determine a setting condition to be satisfied for adjacent point-cloud acquisition time points according to a traveling state of the traveling device; and generate the point-cloud data sequence according to the point-cloud data of the Lidar corresponding to at least one point-cloud acquisition time point that satisfies the setting condition.

As a possible implementation of an embodiment of the present invention, the setting condition may include a time difference between the adjacent point-cloud acquisition time points satisfying a difference threshold corresponding to the traveling state; or, a displacement of the Lidar between the adjacent point-cloud acquisition time points satisfying a displacement threshold corresponding to the traveling state.

As a possible implementation of an embodiment of the present invention, the first determination module 720 is configured to: determine an offset pose data of the Lidar between the adjacent point-cloud acquisition time points according to point-cloud data corresponding to the adjacent point-cloud acquisition time points in the point-cloud data sequence; generate the first trajectory information according to the offset pose data of the Lidar between the adjacent point-cloud acquisition time points and initial pose data of the Lidar; perform fitting processing on pose data corresponding to respective pose acquisition time points in the pose data sequence to determine a mapping relationship between pose acquisition time points and pose data; and generate the second trajectory information according to the mapping relationship and continuous time points on a time axis.

As a possible implementation of an embodiment of the present invention, the first determination module 720 is configured to: determine, according to the adjacent point-cloud acquisition time points in the point-cloud data sequence, offset pose data of the positioning device between the adjacent point-cloud acquisition time points, by querying the second trajectory information; determine initial offset pose data of the Lidar between the adjacent point-cloud acquisition time points according to the offset pose data of the positioning device between the adjacent point-cloud acquisition time points and an initial offset between the positioning device and the Lidar; and determine the offset pose data of the Lidar between the adjacent point-cloud acquisition time points according to the initial offset pose data of the Lidar between the adjacent point-cloud acquisition time points and the point-cloud data corresponding to the adjacent point-cloud acquisition time points.

As a possible implementation of an embodiment of the present invention, the calibration offset includes a calibration space offset. The second determination module 730 is configured to: determine at least one trajectory information correspondence between the first trajectory information and the second trajectory information by adjusting a spatial offset with taking the space offset as a variable and taking an initial space offset between the Lidar and the positioning device as an initial value of the space offset; determine at least one matching degree between the first trajectory information and the second trajectory information under the at least one trajectory information correspondence; and determine the calibration space offset according to a value of a space offset under a trajectory information correspondence whose matching degree satisfies the preset matching degree condition.

As a possible implementation of an embodiment of the present invention, the calibration offset includes a calibration space offset and a calibration time offset. The second determination module 730 is configured to: determine at least one trajectory information correspondence between the first trajectory information and the second trajectory information by adjusting a spatial offset and a time offset with taking the space offset and the time offset as variables and taking an initial space offset between the Lidar and the positioning device as an initial value of the space offset; determine at least one matching degree between the first trajectory information and the second trajectory information under the at least one trajectory information correspondence; and determine the calibration space offset and the calibration time offset according to a value of a space offset and a value of a time offset under a trajectory information correspondence whose matching degree satisfies the preset matching degree condition.

As a possible implementation of an embodiment of the present invention, the preset matching degree condition may include a maximum value of at least one matching degree between the first trajectory information and the second trajectory information under at least one trajectory information correspondence.

According to the apparatus for calibrating the Lidar and the positioning device provided by an embodiment of the present invention, the point-cloud data sequence of the Lidar and the pose data sequence of the positioning device are acquired, in which the Lidar and the positioning device are on the same traveling device. The first trajectory information of the Lidar and the second trajectory information of the positioning device are determined according to the point-cloud data sequence and the pose data sequence. The calibration offset between the Lidar and the positioning device is determined according to the first trajectory information and the second trajectory information, in which, the matching degree between the first trajectory information and the second trajectory information satisfies the preset matching degree condition under the trajectory information correspondence determined based on the calibration offset. Therefore, the coordinate transformation relationship and the time offset between the positioning device and the Lidar may be determined, thus improving accuracy and efficiency of the calibration. And without setting up a calibration station, external parameter calibration between the Lidar and the positioning device may be completed by relying on the surrounding environment, which saves costs.

In the technical solution of the invention, the acquisition, storage, application, processing, transmission, provision and invention of the involved user personal information all perform on the premise of obtaining user permission, comply with the provisions of relevant laws and regulations, and do not violate public order and good customs.

According to an embodiment of the present invention, the present invention also provides an electronic device, a readable storage medium, and a computer program product.

According to an embodiment of the present invention, the present invention also provides an autonomous driving vehicle, including the electronic device described in embodiments of the present invention.

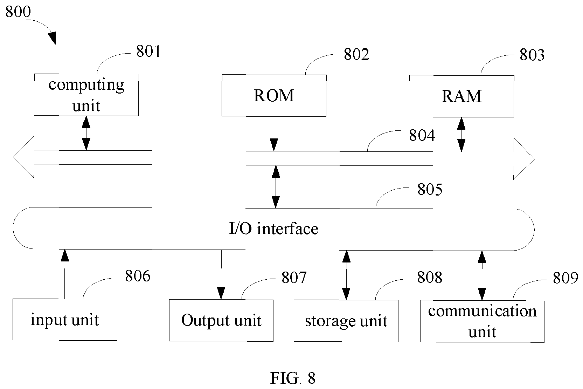

FIG. 8 is a block diagram illustrating an electronic device 800 for implementing embodiments of the present invention. The electronic device is intended to represent various forms of digital computers, such as laptop computers, desktop computers, workbenches, personal digital assistants, servers, blade servers, mainframe computers, and other suitable computers. The on-board device or the terminal device may also represent various forms of mobile devices, such as personal digital processing, cellular phones, smart phones, wearable devices, and other similar computing devices. The components shown here, their connections and relations, and their functions are merely examples, and are not intended to limit the implementation of the invention described and/or required herein.

As illustrated in FIG. 8, the electronic device 800 includes a computing unit 801 performing various appropriate actions and processes based on computer programs stored in a read-only memory (ROM) 802 or computer programs loaded from the storage unit 808 to a random access memory (RAM) 803. In the RAM 803, various programs and data required for the operation of the device 800 are stored. The computing unit 801, the ROM 802, and the RAM 803 are connected to each other through a bus 804. An input/output (I/O) interface 805 is also connected to the bus 804.

Components in the device 800 are connected to the I/O interface 805, including: an inputting unit 806, such as a keyboard, a mouse; an outputting unit 807, such as various types of displays, speakers; a storage unit 808, such as a disk, an optical disk; and a communication unit 809, such as network cards, modems, wireless communication transceivers, and the like. The communication unit 809 allows the device 800 to exchange information/data with other devices through a computer network such as the Internet and/or various telecommunication networks.

The computing unit 801 may be various general-purpose and/or dedicated processing components with processing and computing capabilities. Some examples of computing unit 801 include, but are not limited to, a central processing unit (CPU), a graphics processing unit (GPU), various dedicated artificial intelligence (AI) computing chips, various computing units that run machine learning model algorithms, and a digital signal processor (DSP), and any appropriate processor, controller and microcontroller. The computing unit 801 executes the various methods and processes described above, such as the method for determining a green wave speed. For example, in some embodiments, the method may be implemented as a computer software program, which is tangibly contained in a machine-readable medium, such as the storage unit 808. In some embodiments, part or all of the computer program may be loaded and/or installed on the device 800 via the ROM 802 and/or the communication unit 809. When the computer program is loaded on the RAM 803 and executed by the computing unit 801, one or more steps of the method described above may be executed. Alternatively, in other embodiments, the computing unit 801 may be configured to perform the method for determining a green wave speed in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the invention may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the invention, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user may provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein may be implemented in a computing system that includes background components (for example, a data server), or a computing system that includes middleware components (for example, an application server), or a computing system that includes front-end components (for example, a user computer with a graphical user interface or a web browser, through which the user may interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve the traditional physical host with a Virtual Private Server (VPS) service, which has the defects of difficult management and weak business expansibility. The server may also be a server for a distributed system, or a server that incorporates a block-chain.

It should be understood that the various forms of processes shown above may be used to reorder, add or delete steps. For example, the steps described in the invention could be performed in parallel, sequentially, or in a different order, as long as the desired result of the technical solution disclosed in the invention is achieved, which is not limited herein.

The above specific embodiments do not constitute a limitation on the protection scope of the invention. Those skilled in the art should understand that various modifications, combinations, sub-combinations and substitutions may be made according to design requirements and other factors. Any modification, equivalent replacement and improvement made within the principle of the invention shall be included in the protection scope of the invention.

## Claims

1. A method for calibrating a Lidar and a positioning device, comprising:
acquiring (101, 301, 401, 501) a point-cloud data sequence of the Lidar and a pose data sequence of the positioning device, wherein the Lidar and the positioning device are on a same traveling device;
determining (102, 204, 402, 502) first trajectory information of the Lidar and second trajectory information of the positioning device according to the point-cloud data sequence and the pose data sequence; and
determining (103, 205, 306) a calibration offset between the Lidar and the positioning device according to the first trajectory information and the second trajectory information, wherein a matching degree between the first trajectory information and the second trajectory information satisfies a preset matching degree condition under a trajectory information correspondence determined based on the calibration offset.

2. The method according to claim 1, wherein acquiring (101, 301) the point-cloud data sequence of the Lidar and the pose data sequence of the positioning device comprises:
acquiring (201) the pose data sequence of the positioning device;
determining (202) a setting condition to be satisfied for adjacent point-cloud acquisition time points according to a traveling state of the traveling device; and
generating (203) the point-cloud data sequence according to point-cloud data of the Lidar corresponding to at least one point-cloud acquisition time point that satisfies the setting condition.

3. The method according to claim 1 or 2, wherein the setting condition comprises a time difference between the adjacent point-cloud acquisition time points satisfying a difference threshold corresponding to the traveling state; or, a displacement of the Lidar between the adjacent point-cloud acquisition time points satisfying a displacement threshold corresponding to the traveling state.

4. The method according to any one of claim 1-3, wherein determining (102, 204) the first trajectory information of the Lidar and the second trajectory information of the positioning device according to the point-cloud data sequence and the pose data sequence comprises:
determining (302) an offset pose data of the Lidar between the adjacent point-cloud acquisition time points according to point-cloud data corresponding to the adjacent point-cloud acquisition time points in the point-cloud data sequence;
generating (303) the first trajectory information according to the offset pose data of the Lidar between the adjacent point-cloud acquisition time points and initial pose data of the Lidar;
performing (304) fitting processing on pose data corresponding to respective pose acquisition time points in the pose data sequence to determine a mapping relationship between pose acquisition time points and pose data; and
generating (305) the second trajectory information according to the mapping relationship and continuous time points on a time axis.

5. The method according to claim 4, wherein determining (302) the offset pose data of the Lidar between the adjacent point-cloud acquisition time points according to the point-cloud data corresponding to the adjacent point-cloud acquisition time points in the point-cloud data sequence comprises:
determining the offset pose data of the positioning device between the adjacent point-cloud acquisition time points by querying in the second trajectory information according to the adjacent point-cloud acquisition time points in the point-cloud data sequence;
determining initial offset pose data of the Lidar between the adjacent point-cloud acquisition time points according to the offset pose data of the positioning device between the adjacent point-cloud acquisition time points and an initial offset between the positioning device and the Lidar; and
determining the offset pose data of the Lidar between the adjacent point-cloud acquisition time points according to the initial offset pose data of the Lidar between the adjacent point-cloud acquisition time points and the point-cloud data corresponding to the adjacent point-cloud acquisition time points.

6. The method according to any one of claims 1-5, wherein the calibration offset comprises a calibration space offset;
wherein determining (103, 205, 306) the calibration offset between the Lidar and the positioning device according to the first trajectory information and the second trajectory information comprises:
determining (403) at least one trajectory information correspondence between the first trajectory information and the second trajectory information by adjusting a space offset with taking the space offset as a variable and taking an initial space offset between the Lidar and the positioning device as an initial value of the space offset;
determining (404) at least one matching degree between the first trajectory information and the second trajectory information under the at least one trajectory information correspondence; and
determining (405) the calibration space offset according to a value of the space offset under a trajectory information correspondence whose matching degree satisfies the preset matching degree condition.

7. The method according to any one of claims 1-5, wherein the calibration offset comprises a calibration space offset and a calibration time offset;
wherein determining (103, 205, 306) the calibration offset between the Lidar and the positioning device according to the first trajectory information and the second trajectory information comprises:
determining (503) at least one trajectory information correspondence between the first trajectory information and the second trajectory information by adjusting a spatial offset and a time offset with taking the space offset and the time offset as variables and taking an initial space offset between the Lidar and the positioning device as an initial value of the space offset;
determining (504) at least one matching degree between the first trajectory information and the second trajectory information under the at least one trajectory information correspondence; and
determining (506) the calibration space offset and the calibration time offset according to a value of the space offset and a value of the time offset under a trajectory information correspondence whose matching degree satisfies the preset matching degree condition.

8. The method according to any one of claims 1-7, wherein the preset matching degree condition comprises a maximum value of at least one matching degree between the first trajectory information and the second trajectory information under at least one trajectory information correspondence.

9. An apparatus (700) for calibrating a Lidar and a positioning device, comprising:
an acquisition module (701), configured to acquire a point-cloud data sequence of the Lidar and a pose data sequence of the positioning device, wherein the Lidar and the positioning device are on a same traveling device;
a first determination module (702), configured to determine first trajectory information of the Lidar and second trajectory information of the positioning device according to the point-cloud data sequence and the pose data sequence; and
a second determination module (703), configured to determine a calibration offset between the Lidar and the positioning device according to the first trajectory information and the second trajectory information, wherein a matching degree between the first trajectory information and the second trajectory information satisfies a preset matching degree condition under a trajectory information correspondence determined based on the calibration offset.

10. The apparatus according to claim 9, wherein the acquisition module (701) is configured to:
acquire the pose data sequence of the positioning device;
determine a setting condition to be satisfied for adjacent point-cloud acquisition time points according to a traveling state of the traveling device; and
generate the point-cloud data sequence according to point-cloud data of the Lidar corresponding to at least one point-cloud acquisition time point that satisfies the setting condition.

11. The apparatus according to claim 9 or 10, wherein the setting condition comprises a time difference between the adjacent point-cloud acquisition time points satisfying a difference threshold corresponding to the traveling state; or, a displacement of the Lidar between the adjacent point-cloud acquisition time points satisfying a displacement threshold corresponding to the traveling state.

12. The apparatus according to any one of claims 9-11, wherein the first determination module (702) is configured to:
determine an offset pose data of the Lidar between the adjacent point-cloud acquisition time points according to point-cloud data corresponding to the adjacent point-cloud acquisition time points in the point-cloud data sequence;
generate the first trajectory information according to the offset pose data of the Lidar between the adjacent point-cloud acquisition time points and initial pose data of the Lidar;
perform fitting processing on pose data corresponding to respective pose acquisition time points in the pose data sequence to determine a mapping relationship between pose acquisition time points and pose data; and
generate the second trajectory information according to the mapping relationship and continuous time points on a time axis.

13. The apparatus according to claim 12, wherein the first determination module (702) is configured to:
determine the offset pose data of the positioning device between the adjacent point-cloud acquisition time points by querying in the second trajectory information according to the adjacent point-cloud acquisition time points in the point-cloud data sequence;
determine initial offset pose data of the Lidar between the adjacent point-cloud acquisition time points according to the offset pose data of the positioning device between the adjacent point-cloud acquisition time points and an initial offset between the positioning device and the Lidar; and
determine the offset pose data of the Lidar between the adjacent point-cloud acquisition time points according to the initial offset pose data of the Lidar between the adjacent point-cloud acquisition time points and the point-cloud data corresponding to the adjacent point-cloud acquisition time points.

14. The apparatus according to any one of claims 9-13, wherein the calibration offset comprises a calibration space offset;
wherein the second determination module (703) is configured to:
determine at least one trajectory information correspondence between the first trajectory information and the second trajectory information by adjusting a spatial offset with taking the space offset as a variable and taking an initial space offset between the Lidar and the positioning device as an initial value of the space offset;
determine at least one matching degree between the first trajectory information and the second trajectory information under the at least one trajectory information correspondence; and
determine the calibration space offset according to a value of the space offset under a trajectory information correspondence whose matching degree satisfies the preset matching degree condition.

15. A computer-readable storage medium storing computer instructions, wherein the computer instructions are configured to cause a computer to perform the method according to any one of claims 1 to 8.
